# EUROPEAN PATENT APPLICATION

(11) **EP 1 452 864 A1**
(43) Date of publication of application: **01.09.2004**
(21) Application number: 02783671.7
(22) Date of filing: 28.11.2002
(51) Int. Cl.: G01N 30/60, B01D 15/08

(54) **SEPARATING PIPE**

(30) Priority: 29.11.2001 JP 2001364677
(71) Applicant: Gl Sciences Incorporated, Tokyo 163-1130 (JP)
(72) Inventor: Nyudo, Masahiko, c/o GL Sciences Inc., Fukushima-shi, Fukushima 960-8201 (JP); Tahara, Mineo, c/o GL Sciences Inc., Fukushima-shi, Fukushima 960-8201 (JP)
(74) Representative: Staeger - Sperling
(86) International application number: PCT/JP2002/012455
(87) International publication number: WO 2003/046545

(57) **Abstract**

In the field of substance separation which uses the flow of a fluid, it is necessary to reduce the inside diameter of a separation column in order to meet the tendency to reduce the volume of an organic solvent used. The smaller the volume of a target sample which is caused to flow, the higher the concentration of the target sample, thereby permitting a high-sensitivity analysis. For this purpose, it is necessary to reduce the diameter of a separation column. Therefore, the manufacturing of such a separation column is difficult and besides the separation column becomes apt to fracture. Therefore, the separation column is fabricated as a double-wall tube constituted by an outer tube and an inner tube in such a manner that the outer tube is separated so as to be freely inserted and extracted. Furthermore, a union is fitted to the end of the outer tube by use of a screw thereby to prevent torsions between the outer tube and the inner tube and strains and, at the same time, to eliminate a space for a dead volume.

## Description

### BACKGROUND OF THE INVENTION

### Field of the Invention

The present invention relates to a separation column and, more particularly, to an analytical column and a separation column used in liquid phase extraction and pretreatment.

### Description of the Related Art

In a chromatographic column for separating substances by using a fluid, the volume of the fluid which fills the interior of the column will decrease with decreasing inside diameter of the column in proportion to the square of the inside diameter. A fluid used in a chromatographic column contains mainly an organic solvent. Therefore, it is necessary to make efforts to reduce the volume of the fluid from the problem of the global environment and the like, and there is a tendency to minimize the volume of the fluid. For this purpose, reducing the inside diameter is the most effective means.

On the other hand, in the analysis field where chromatographic columns are mainly used, the material for a contact portion of a chromatographic column has also a great effect. In fluid chromatography, a target sample is detected in an eluent which is caused to flow through a chromatographic column and, therefore, the smaller the volume of the fluid which is caused to flow, the higher the concentration of the target sample, thereby permitting a high-sensitivity analysis. For reasons as described above, small chromatographic columns having a column diameter of not more than several millimeters in inside diameter are required.

However, a chromatographic column made of metal is corroded by a mobile phase used in the separation of a moving organism sample etc. Besides, in the manufacturing process of a chromatographic column made of metal, the smaller the inside diameter of the column, the more conspicuous the roughness of the surface of a wall face will tend to be. Therefore, the smaller the column diameter, the higher the production cost and the more expensive the column.

On the other hand, in the case of a glass column, which is frequently used, cracks are produced from worked parts such as screws and flanges. Furthermore, a glass column has the drawbacks of low pressure stability, low resistance to high pressure and susceptibility to failure.

Therefore, there has been proposed methods by which a separation column is fabricated separately as an outer tube and an inner tube, which are combined into one and used. For example, the Japanese Patent Laid-Open No. 9-119924 describes a structure in which special steel is used as the material for an inner tube, which is elongated so that the inside diameter can be varied while keeping the quality of the inner surface in order to ensure the smoothness of the inner surface and this inner tube is held within a carrier tube, which is an outer pipe, by use of an adapter member. Furthermore, in the Japanese Patent No. 2619273 is proposed a structure in which a glass tube is inserted in an outer jacket and a column is formed by use of a plunger and union nuts including a milled nut, which are column connection members. In both cases, a double structure is adopted in which a small-diameter tube is obtained by the precision and ease of manufacture of the inner tube and the weakness of the inner tube is protected by the outer tube.

In the above Japanese Patent Laid-Open No. 9-119924, however, for the connection to a chromatographic apparatus, it is possible to perform connection to a cartridge system through a groove 24 by use of conventional connection parts. The connection design is such that, first, by use of a support nut fitted into a tube of a separation column, part of the tube is fitted into the groove 24 which forms the groove of the tube, a strass member which is a connection part is fitted into a tube end and the support nut is screwed together by a cap nut, thereby to support and fix the strass member (the U.S. Patent No. 4737284). Therefore, the number of parts is large and a simple connection is not obtained.

In the latter patent, the connection to a chromatographic apparatus etc. is such that with the inner tube inserted in the outer tube, a plunger provided with a discharge line is inserted into an end of the glass tube, which is the inner tube, and is fixed by the union nut having the milled nut. Therefore, it is necessary that the plunger etc. enter the end of the glass tube, which is the inner tube, and hence it is difficult to make an inner tube having a small diameter. Furthermore, when only the pipe end is formed wide, this provides the drawbacks of a difficulty in manufacturing, inconvenience of use, susceptibility to cracking, etc. Moreover, when the separation column is connected to a chromatographic apparatus etc., a system which involves screwing the milled nut and the union nut into is adopted, and in fixing both ends of the separation column, torsions and strains may sometimes be given to the inner tube. In this case, the smaller the diameter of the inner tube, the more an adverse effect on the rheological properties of a sample substance will apt to be produced.

Also, when Teflon (registered trade name), which has no pressure resistance, etc. are used in the inner tube, this provided the fear of a fracture due to liquid pressure. Furthermore, in chromatography, the lower the temperature, the lower the moving speed of sample components within the column, with the result that elution can be delayed. When the temperature is further lowered, the sample components accumulate at the inlet of the column and can be concentrated. In this state, the sample components which do not elute cannot be detected. Therefore, there has been no effective means although it is possible to cause a target component to be eluted by raising the temperature after the target component is concentrated at the inlet of the column.

Therefore, in the present invention, there is proposed a separation column, which is formed as a double-wall tube comprising an inner tube and an outer tube, permits easy connection to a chromatographic apparatus etc. owing to its very simple structure, and provides a complete gastight construction so that during the connection and fixing of the separation column torsions and strains between the outer tube and the inner tube are prevented, thereby eliminating an adverse effect of a dead volume etc. on the inner tube.

### SUMMARY OF THE INVENTION

In the present invention, there is provided a separation column which is formed as a double-wall tube, comprising: an inner pipe; an outer pipe; and a union nut, the union nut being freely screwed to an end of the outer pipe; the outer pipe being divided so as to be freely inserted and extracted. As a result of this, when the separation column is formed by screwing in the union nut, the fixing of the position of the inner tube is performed by the union nut and, therefore, the torque of the union nut is transmitted to the inner tube and there is a possibility that the inner tube is twisted or strains are given to the inner tube. At this time, however, by shifting the fitting of the outer tube to make an adjustment, the torque of the union nut can be prevented from being transmitted to the inner tube. Or alternatively, the torque of the union nut can be corrected.

As a result of this, it is possible to completely ensure the performance of the separation tube without causing any damage to the performance of the separation column and the analysis capacity can be ensured. Furthermore, there is no space for a dead volume and it is possible to positively prevent a dead volume. Needless to say, the precision working of the inner tube is possible owing to the inner and outer double-wall structure. Besides, the construction of the outer tube is simple and the number of parts is small for the whole separation column. Hence, the separation tube provides convenience in use and is easy to use and advantageous in terms of cost.

In the present invention, in the above-described separation column, the union nut is screwed into the outer tube and the outer tube is fixed via a ferrule. As a result of this, the inner tube is held in a fixed position by means of the ferrule and firmly fixed without the need to use other parts simply by screwing in the unit nut.

Furthermore, in the present invention, in the above-described separation column, the outer tube has one or more holes or connection parts which communicate with a space between the inner tube and the outer tube. As a result of this, it becomes possible to reduce a pressure difference between the outer tube and the inner tube by putting a fluid between the outer tube and the inner tube in order to resist the liquid pressure in the inner tube, it becomes possible to cause a target component concentrated at the inlet of the column to be eluted by raising the temperature, and by bringing the inner tube into contact with the outside air or another fluid etc., it becomes possible to easily perform various operations such as temperature regulation and pressure regulation. This is effective in protecting the inner tube and shortening the analysis time.

Furthermore, in the present invention, in the above-described separation tube, at least part of the union nut is formed by a transparent material. As a result of this, this formed transparent part enables the fixing of the inner tube in position to be visually recognized and the tightening condition when the ferrule is used can be checked. Thus, operations can be perfectly carried out.

### BRIEF DESCRIPTION OF THE DRAWINGS

FIG. 1 is a longitudinal sectional view of a separation column taken along the centerline thereof in an embodiment of the present invention;

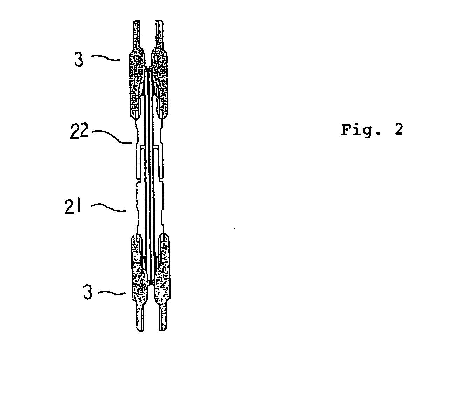

FIG. 2 is a longitudinal sectional explanatory diagram of a separation column taken along the centerline thereof in an embodiment of the present invention;
FIG. 3 is a longitudinal sectional explanatory diagram of a separation column taken along the centerline thereof in an embodiment of the present invention;
FIG. 4 is a longitudinal sectional explanatory diagram of a separation column taken along the centerline thereof in an embodiment of the present invention;
FIG. 5 is a longitudinal sectional explanatory diagram of a separation column taken along the centerline thereof in an embodiment of the present invention;
FIG. 6 is a partially enlarged explanatory diagram of FIG. 1;
FIG. 7 is a diagram to explain the use condition of an embodiment of the present invention;
FIG. 8 is a chromatogram diagram obtained by use of a conventional column;
FIG. 9 is a chromatogram diagram obtained by use of a column of the present invention;
FIG. 10 is a chromatogram diagram obtained by use of a column of the present invention;
FIG. 11 is a chromatogram diagram obtained by use of a conventional column;
FIG. 12 is a chromatogram diagram obtained by an implementation experiment in Embodiment 3 of the present invention; and
FIG. 13 is a longitudinal sectional explanatory diagram of a separation column taken along the centerline thereof in an embodiment of the present invention.

### DETAILED DESCRIPTION OF THE PREFERRED EMBODIMENTS

The present invention will be described in detail on the basis of the embodiments shown in the drawings.

The separation column in the present invention includes a capillary column, including a microcolumn, a general- purpose analytical column, a guard column, a preparative column, a solid phase extraction column and other pretreatment separation columns.

In the figures, the numeral 1 denotes an inner tube, and it is common practice to use a fine tube such as a micro capillary column, for example, a capillary column made of fused silica. Although the material for the inner tube 1 is not especially limited, the inner tube 1 is formed from a desired material, such as synthetic resins of PEEK etc., stainless steel and stainless steel the inner surface of which is lined with glass. It is preferred that the ends of the inner tube 1 be each provided with a ferrule 5.

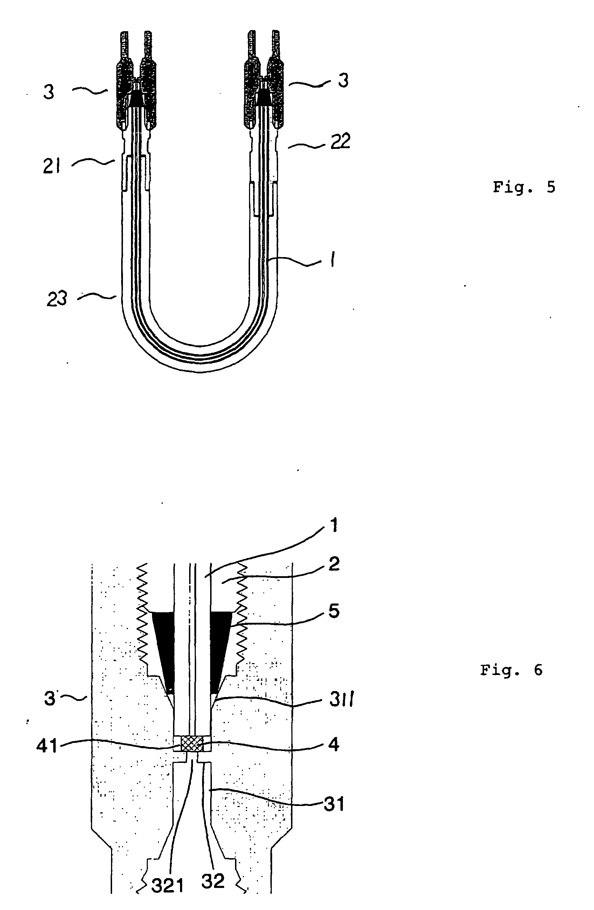

The numeral 2 denotes an outer tube, which is divided into two members 21, 22. An engaging convexity 211 is formed in one member 21 and an engaging concavity 221 is formed in the other member 22. Although the engaging convexity 211 and the engaging concavity 221 are each formed in a stepped manner, it is also possible to form them in a tapered manner. The outer tube 2 can be formed from a desired material, such as synthetic resins of PEEK etc., stainless steel and stainless steel the inner surface of which is lined with glass. Union nuts 3, 3 are screwed into both ends of each member 21, 22 of the outer pipe 2. A through hole 31 is provided in the union nut 3 and a convexity 32 is provided in the middle part of the through hole. A fine pore 321 is formed in the middle of this convexity 32. (FIG. 6)

The numeral 4 denotes a filter the circumference of which is surrounded by a packing 41, and in this state the filter 4 is inserted in the through hole 31 of the union nut 3 and caused to abut against the convexity 32. Although it is convenient to use a SUS sintered filter and a SUS screen filter as the filter 4, other filters may also be used. This filter is effective in preventing a filler from flowing out and entering the fine pore 1 or dust and crystals from flowing in. It is recommendable that the outer tube 2 be provided with a joining part adaptable to a commercially available cartridge system, for example, locking grooves 6, 6 suited to the joint portion of the US Patent No. 4737284. In this case, it is also possible that the union nut 3 is screwed into a screw groove provided in the outer tube 2 and that another support nut locked in the above-described locking groove 6. Furthermore, this locking groove 6 can also be used as a locking portion for a rotary mechanism formed by drilling part of a round tube.

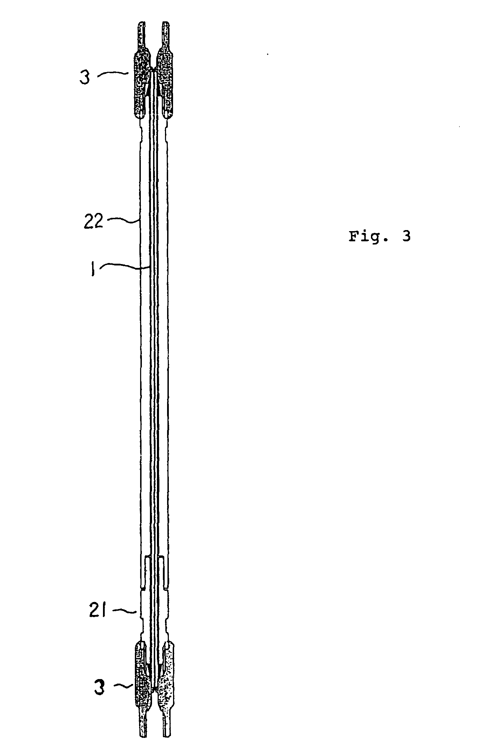

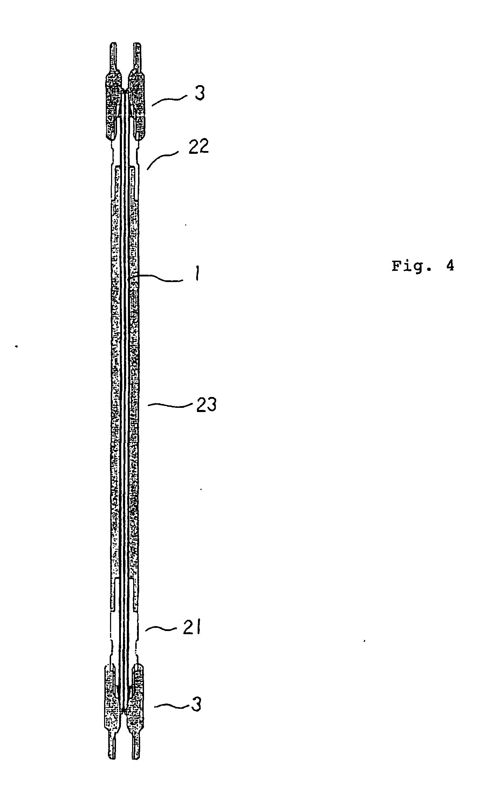

Needless to say, length and inside diameter settings of the outer tube 2 can be freely selected depending on the purpose and an object to be separated. However, in the setting of the length, for example, it is also possible to perform setting in such a manner that one outer tube 21 is used as the basis and a selection is made from different lengths of the other outer pipe 22 (FIG. 3). Furthermore, the outer pipe 2 may be divided into three members 21, 22, 23 and it is possible to use the members 21 and 22 as the basis and set the length of the middle member 23 at a long value (FIG. 4). Also, a bent tube may be used as the member 23 (FIG. 5).

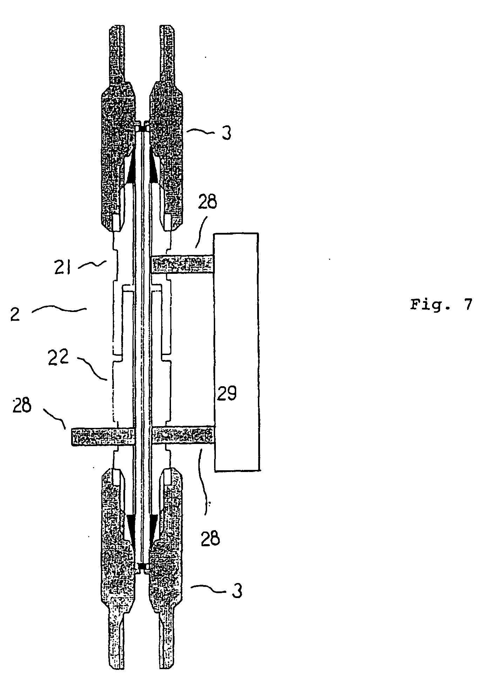

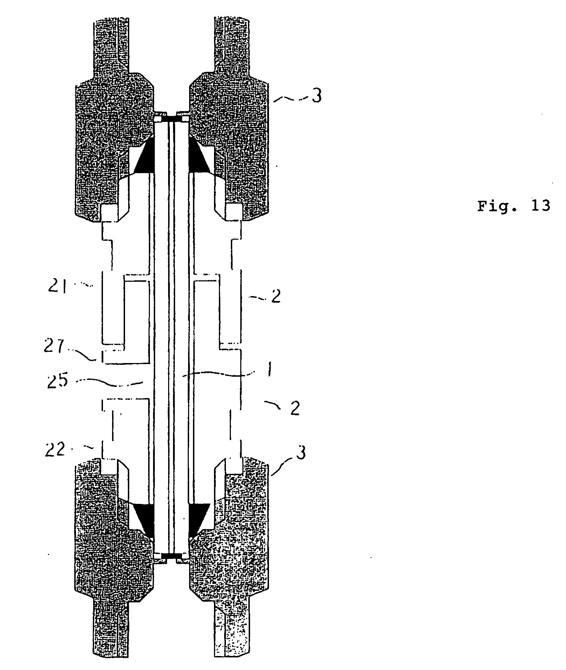

It is possible to provide a hole portion 25 in the outer tube 2, thereby bringing the outside air into contact with the space between the inner tube 1 and the outer tube 2. As a result of this, it becomes easy to adjust the temperature of the inner tube 1 to the outside air temperature. It is also possible to provide a cover 27 which can open and close. Also, by introducing a temperature-regulated liquid and gas from this hole portion 25, it becomes possible to adjust the temperature of the inner tube 1 and temperature raising, cooling, etc. can be performed in a shorter time, with the result that this arrangement can be used in shortening the analysis time and performing concentration. It is possible to provide a connection member 28 of other tube etc. in this hole portion 25. Also, it is possible to provide an appropriate number of hole portions 25 in the outer tube 25 and, therefore, various operations are possible; for example, a liquid is caused to circulate between two hole portions 25, 25 and the liquid is extracted from another hole portion 25, or different temperature-regulating media are introduced from two places and discharged from one hole portion 25 (FIG. 7, FIG. 13).

When Teflon (registered trade name), which has no pressure resistance, etc. are used in the inner tube 1, by applying a liquid pressure from this hole portion 25, it is also possible to use this hole portion 25 in preventing a breakdown of the inner tube 1. For example, by filling the outer tube with water at 10 MPa in a low pressure mode by use of a high pressure pump, the inner column made of Teflon (registered trade name) can be used without a breakdown because a pressure difference does not occur up to 10 MPa. Furthermore, if a transmitting resin suited for the purpose is used as the material for the inner tube 1, the present separation column can be used in demineralization etc. by causing water to flow through the outer pipe. For example, a tube through which only Na ions are caused to pass is filled with an anion exchange filler and is used as the inner tube column. When a sample containing a large amount of salt is injected, with water kept flowing through the outer tube, it is possible to remove the Na ions by the ion exchange capacity of the tube.

The accumulation of Na ions into an anion exchange filler filled in the interior does not occur and the life is substantially extended. This effect applies also to a reversed phase column etc. and the protection of a filler filled in the interior and the cleanup effect of ion removal are ensured. Furthermore, by using a tube that performs selective transmission by the molecular weight, it is possible to discharge a given amount of components from inside a column to the outside, the same protection of an inner column and cleanup effect as described above can be obtained.

### [Examples]

### [Example 1]

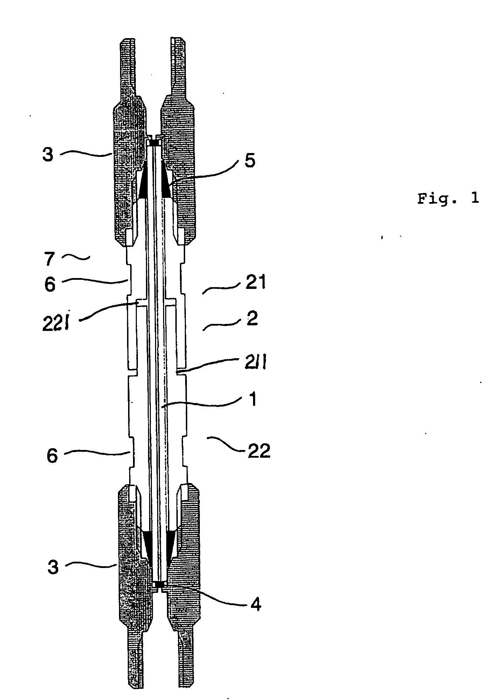

A microcapillary column 1 as an inner tube which is selected according to the purpose is inserted into an outer tube 2. At this time, both ends of the microcapillary column 1 have portions exposed from the outer tube 2. Ferrules 5, 5 are fitted into both ends beforehand. Next, union nuts 3, 3 are put on both ends of the outer tube 2 and screwed in. At this time, both ends of the microcapillary column 1 are inserted into a through hole 31 of the union nuts 3, 3 and the leading end of the microcapillary column 1 is brought into contact with a filter 4. As the union nuts 3, 3 are crewed in, the ferrule 5 is caused to abut against a taper 311 formed in the through hole 31 and tightens this taper, thereby forming a separation column 7. (FIG. 1, FIG. 6)

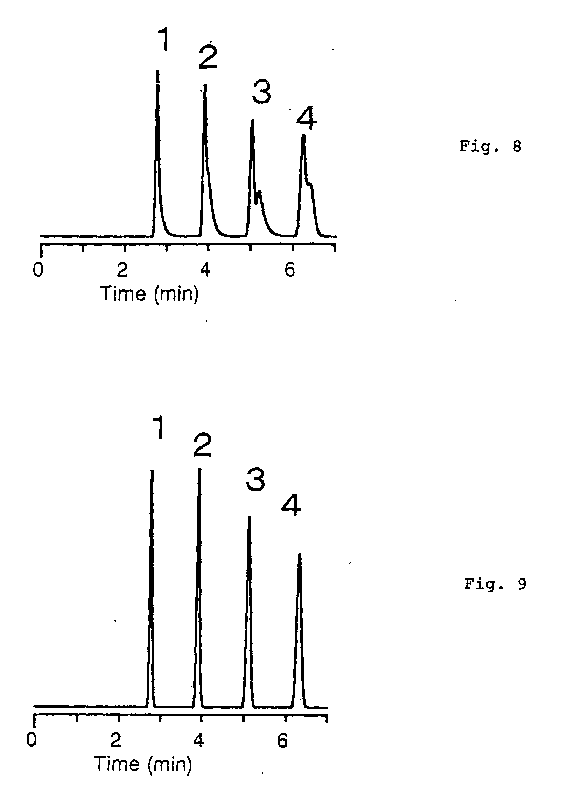

FIG. 9 shows a chromatogram obtained by conducting an experiment using Embodiment 1 under the following conditions.

A microcapillary column having an inside diameter of 0.3 mm, in particular, lacks physical endurance and is apt to be broken. Peak breaking is observed as shown in FIG. 8 in a column obtained by filling a PEEK tube 0.3 mm in inside diameter and 150 mm in length with Inertsil (registered trade name) ODS-33 µm at a high pressure was given a physical force and bent. When the column of the present invention was used, the inner tube was protected by the outer tube and was not bent and the chromatogram of FIG. 9 was obtained. In the chromatogram of the present invention, the effect on the protection of the inner tube displays itself.

### Analysis conditions

Eluent: 65% acetonitrile
Flow rate: 4 µl/min
Detection wavelength: UV 254 nm
Sample volume: 10 nl
Column temperature: Room temperature

### Sample components

1 Acetophenone
2 Benzene
3 Toluene
4 Naphthalene

### [Example 2]

### Example of application to an analysis of benzpyrene in the environmental water

A column the outer tube 2 of which has three hole portions 26, 26, 26 is used. A drain pipe 28 is connected to one of the hole portions 26 and is locked by a pinch cock. The remaining two hole portions 26, 26 are connected to a circulating constant-temperature water tank 29 by use of connection parts 28, 28 and methanol at 4°C is circulated. The temperature of the whole column is regulated by use of a column oven at 7°C. The temperature in the interior of the column reaches temperature equilibrium, though this depends on the flow rate of the circulating constant-temperature water tank and the inner tube diameter, and the temperature of the inner tube is controlled to 4°C. When a sample is introduced at 4°C, the matrix components other than the target benzpyrene are eluted first. In 2 minutes after the approach of the matrix components to the outlet, the circulation in the circulating constant-temperature water tank is stopped and simultaneously the liquid in the tank is extracted by means of the drain pipe. As a result of this, the temperature is abruptly raised to a setting of the column oven of 70°C. Benzpyrene is separated from the matrix in a shorter time and is eluted. FIG. 8 shows a chromatogram obtained by the embodiment shown in FIG. 7.

It is possible to make provisions for the next injection by recovering the initial conditions after the elution of benzpyrene. It is also possible to automate these series of operations by connecting solenoid valves etc. to the line and by synchronizing the operations with injection.

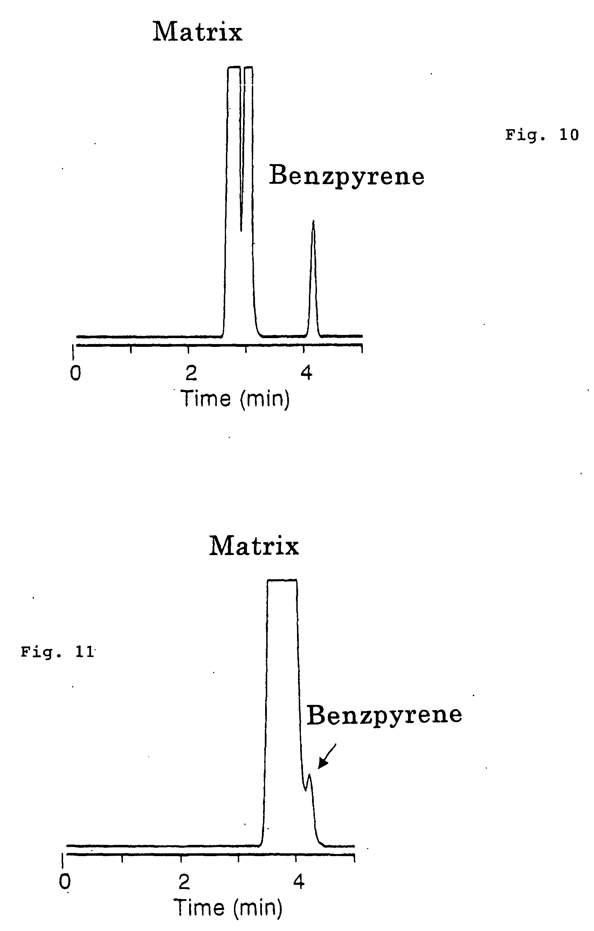

FIG. 11 shows an example of an analysis of benzpyrene in the environmental water at a constant temperature of 50°C. In this case, it is impossible to obtain quantitativeness due to the presence of benzpyrene on the environmental water matrix. When a column of the present invention is used, however, the matrix and benzpyrene are completely separated, permitting quantitative determination. (FIG. 10)

In a case where a column oven is not used and liquid carbon dioxide is caused to flow in the initial period to perform cooling and hot water at 70°C is caused to flow, a similar effect is obtained. In fact, the same effect as in FIG. 10 was obtained. In this case, the effect is great when the injection side is provided in the lower part, hot water is put and the drain is set in the upper part, and it is also possible to give a temperature gradient to the inlet and outlet of the column

### Analysis conditions

### Chromatogram (FIG. 10)

### Filling of a column of the invention 0.5 mm in inside diameter and 150 mm in length with Inertsil (registered trade name) ODS-P 5 µm

Eluent: 80% acetonitrile Flow rate: 20 µl/min
Detection wavelength: UV 254 nm
Volume of injected sample: 10 µl
Sample: Addition of 10 ppm of benzpyrene to drain

### Temperature control (refer to the description.) Chromatogram (FIG. 11)

### Filling of a conventional column with Inertsil (registered trade name) ODS-P 5 µm

Eluent: 80% acetonitrile Flow rate: 20 µl/min
Detection wavelength: UV 254 nm
Volume of injected sample: 10 µl
Sample: Addition of 10 ppm of benzpyrene to drain
Temperature: 50°C constant

### [Example 3]

It is not always necessary that a separation column of the present invention is a straight tube, and the invention can also be applied to bent tubes such as a U-shaped tube.

This separation column can be used in a case where the separation column is connected directly to an injector loop of liquid chromatography and a solid phase is extracted and in pretreatment for the trapping of the air. In an integrated protective tube, it is impossible to ensure the accuracy of a connection part of a union nut 3 and the fabrication is difficult. In this system of the invention, bent tube portions and straight tube portions can be fabricated as separate parts and, therefore, the accuracy of the connection parts can be increased.

When a straight tube is to be attached to a loop portion of an inj ector, piping for connection is required; hence parts such as joints and piping are necessary and labor is also required. Furthermore, because the interior of the piping is not filled with a filler, a dead volume is produced and the peak shape worsens. The column of the present invention can be applied to a bent tube and can be attached directly to the injector and the loop portion.

Furthermore, in the case of a U-shaped tube, the whole column can be easily immersed in a cooling medium such as liquid nitrogen and only a target component can also be concentrated and trapped.

Because separate parts are used, it is possible to fabricate various shapes of column by combining bent tubes and straight tubes, and by changing combinations it is possible to design the column shape according to the purpose, for example, immersing only the U-shaped portion in a cooling medium and keeping the temperature of the remaining parts at room temperature.

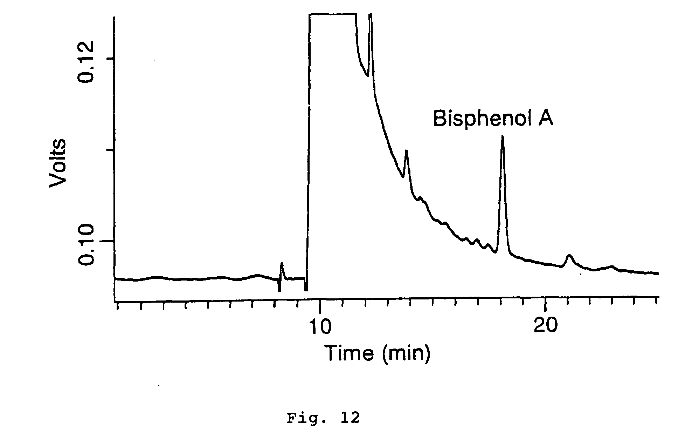

The following experiment was conducted by use of the separation column of the present invention shown Example 3 and the chromatograph shown in FIG. 12 was obtained.

An isochratic HPLC system in which a column 0.5 mm in inside diameter and 150 mm in length is filled with Insertsil (registered trade name) ODS-3 3 µm was prepared. As an eluent, a mixture of acetonitrile and 60 mM NaCIO 4 (40/60) adjusted to pH 2.5 with phosphoric acid was used at a flow rate of 4 µl/min. An electrochemical detector with W1= 900 mV and temperature of 33°C was used for detection.

A bent-tube column of the present invention 0.5 mm in inside diameter and 100 mm in length, which is filled with Econoprecip ODS- 40 µl, was connected to the injector loop portion in place of a loop. The sample used was obtained by adding 0.1 ppb of bisphenol A to clean water.

The injector was switched to the load side and 1 ml of sample water was injected by use of a syringe. The target bisphenol A is concentrated within the column. Next, the injector was switched to the inject side and an analysis was made. As a result, bisphenol A having quantitativeness as shown in the chromatogram was detected. The same concentration column was used in analyzing the air components. The concentration column was immersed in liquid nitrogen and cooled and 400 1 of bisphenol A was added by use of an air pump and the air was introduced. After the switching of the injector to the load side, the concentration column was attached to the loop portion. After that, 1 ml of pure water was injected, the injector was switched to the inject side and an analysis was made.

As a result, a similar chromatogram was obtained. Although in this example a manual operation was performed, it is also possible to perform the operation automatically by using an automatic valve in place of the injector, building solenoid valves etc. in the line, automatically exchanging a solvent which is caused to flow, and feeding a sample liquid by use of a syringe pump etc.

As described above, according to a separation column of a first feature of the present invention, there is provided a double-wall tube, which comprises: an inner pipe; an outer pipe; and a union nut, the union nut being freely screwed to an end of the outer pipe; the outer pipe being divided so as to be freely inserted and extracted. As a result of this, when the separation column is formed by screwing in the union nut, the fixing of the position of the inner tube is performed by the union nut and, therefore, the torque of the union nut is transmitted to the inner tube and there is a possibility that the inner tube is twisted or strains are given to the inner tube. At this time, however, by shifting the fitting of the outer tube to make an adjustment, the torque of the union nut can be prevented from being transmitted to the inner tube. Or alternatively, the torque of the union nut can be corrected.

As a result of this, it is possible to completely ensure the performance of the separation tube without causing any damage to the performance of the separation column and the analysis capacity can be ensured. Furthermore, there is no space for a dead volume and it is possible to positively prevent a dead volume. Needless to say, the precision working of the inner tube is possible owing to the inner and outer double-wall structure. Besides, the construction of the outer tube is simple and the number of parts is small for the whole separation column. Hence, the separation tube provides convenience in use and is easy to use and advantageous in terms of cost.

According to a separation column of a second feature of the present invention, the union nut is screwed into the outer tube and the outer tube is fixed via a ferrule. Therefore, the inner tube is held in a fixed position by means of the ferrule and firmly fixed without the need to use other parts simply by screwing in the unit nut.

According to a separation column of a third feature of the present invention, the outer tube has one or more holes or connection parts which communicate with a space between the inner tube and the outer tube. Therefore, by bringing the inner tube into contact with the outside air or another fluid etc., it becomes possible to easily perform various operations such as temperature regulation and pressure regulation. This is effective in protecting the inner tube and shortening the analysis time.

Furthermore, according to a separation column of a fourth feature of the present invention, at least part of the union nut is formed by a transparent material. Therefore, this formed transparent part enables the fixing of the inner tube in position to be visually recognized and the tightening condition when the ferrule is used can be checked. Thus, operations can be perfectly carried out.

## Claims

1. A separation column which is formed as a double-wall tube, comprising:
an inner pipe;
an outer pipe; and a union nut,
the union nut being freely screwed to an end of the outer pipe;
the outer pipe being divided so as to be freely inserted and extracted.

2. The separation column according to claim 1, wherein the union nut is screwed into the outer tube and the outer tube is fixed via a ferrule.

3. The separation column according to claim 1 or 2, wherein the outer tube has one or more holes or connection parts which communicate with a space between the inner tube and the outer tube.

4. The separation column according to claim 1 or 2, wherein at least part of the union nut is formed by a transparent material.

5. The separation column according to claim 3, wherein at least part of the union nut is formed by a transparent material.
